# EUROPÄISCHE PATENTSCHRIFT

(11) **EP 2 291 070 B1**
(45) Veröffentlichungstag und Bekanntmachung des Hinweises auf die Patenterteilung: **05.04.2017**
(21) Anmeldenummer: 09768897.2
(22) Anmeldetag: 03.06.2009
(51) Int. Cl.: A01G 9/02

(54) **PFLANZTOPF**
PLANTING POT
POT POUR PLANTES

(30) Priorität: 24.06.2008 DE 202008008356 U
(43) Veröffentlichungstag der Anmeldung: 09.03.2011
(73) Patentinhaber: Pöppelmann Holding GmbH & Co. KG., 49393 Lohne (DE)
(72) Erfinder: NOBBE, Norbert, 49451 Holdorf (DE)
(74) Vertreter: Wischmeyer, André
(86) Internationale Anmeldenummer: PCT/EP2009/003941
(87) Internationale Veröffentlichungsnummer: WO 2009/156048

(56) Entgegenhaltungen:
- DE-U1- 20 119 165
- DE-U1- 20 210 788

## Beschreibung

Die vorliegende Erfindung betrifft einen Pflanztopf aus Kunststoff mit einem aus Löchern versehenen Boden, der einen eine erste Ebene ausbildenden, insbesondere mehrteiligen Standbereich zur Aufstellung des Pflanztopfes auf einer Kontaktfläche aufweist, wobei der Standbereich von wenigstens einem randseitig hinausführenden Kanal unterbrochen ist.

Im Erwerbsgartenbau ist eine Vielzahl von bepflanzten Pflanztöpfen gleichzeitig zu bearbeiten. Die Bewässerung der Pflanztöpfe erfolgt hierbei insbesondere durch Ebbe-/Flut-Bewässerung oder durch eine Berieselung von oben. Zur optimalen Be- und Entwässerung der Pflanztöpfe sowie zur optimalen Belüftung des in dem Pflanztopf befindlichen Guts ist gerade der Boden der Pflanztöpfe mit einer größeren Anzahl von Kanälen und Löchern versehen, durch die ein Austausch von Luft und Wasser zwischen dem im Inneren des Pflanztopfes befindlichen Material und der äußeren Umgebung gewährleistet ist. Der Austausch von Wasser kann hierbei über schwallartiges Fließen oder über sogenannte kapillare Ent- oder Bewässerung erfolgen. Für beide Bewässerungsformen existieren verschiedene Lochformen, so dass die Bodengeometrie eines Pflanztopfes entsprechend komplex ist. Die Produktion der mit komplexen Geometrien versehenen Böden oder Bodenbereiche der Pflanztöpfe stellt hohe Anforderungen an die Werkzeuge der im Spritzguss- oder Tiefziehverfahren hergestellten Pflanztöpfe. Stempel zum Anbringen von aus Bodenflächen in Kanalseitenwände übergehenden Löchern müssen passgenau ausgebildet werden und führen bei Ungenauigkeiten zu hohem Ausschuss während der Produktion.

Aus DE 202 10 788 U1 ist ein Pflanztopf gemäß dem einleitenden Teil des Anspruchs 1 bekannt.

Es ist daher Aufgabe der vorliegenden Erfindung, einen Pflanztopf dergestalt weiterzubilden, dass er einerseits den Anforderungen an Bewässerung und Belüftung genügt und für eine Herstellung insbesondere im Spritzgussverfahren besser geeignet ist.

Die Aufgabe wird gelöst durch einen Pflanztopf gemäß Anspruch 1, vorteilhafte Weiterbildungen der Erfindung sind den hierauf zurückbezogenen Unteransprüchen sowie der nachfolgenden Beschreibung zu entnehmen.

Der erfindungsgemäße Pflanztopf weist in einer an den Standbereich angrenzenden Fläche ein der Entwässerung eines untersten Pflanztopfbereiches dienendes, beabstandet von einem Kanal angeordnetes Loch auf. Der vorzugsweise einer schnellen Entwässerung und Belüftung dienende Kanal ist somit ohne Verbindung mit einer Kante bzw. einem Seitenrand des in einem unteren Bereich des Pflanztopfes angeordneten Loches. Dieses kann daher ohne Berücksichtigung einer besonderen Geometrie in einem Spritzgußwerkzeug realisiert werden. Gleichzeitig kann dass Loch auch auf einfache Weisen durch Stanzen beispielsweise eines tiefgezogenen Pflanztopfes geschaffen werden.

Im Gegensatz zu ausschließlich in der Ebene des Standbereiches angeordneten Löchern ist dieses zur Entwässerung eines untersten Pflanztopfbereiches zumindest teilweise aus dieser Ebene nach oben heraus angeordnet. Es kann daher eine Entwässerung durch das Loch hindurch stattfinden. Der von dem Loch ausgebildete Hohllagebereich ist hierfür vorzugsweise nicht umschlossen sondern in Verbindung mit anderen Hohllagebereichen, insbesondere ohne dass der Rand des Loches eine Verbindung zu einer Kante einer Kanalwand aufweist. Vorzugsweise kann es sich bei der das Loch aufweisenden Fläche um eine teilweise unterbrochene kreissegmentförmige Fläche um einen zentralen Hohllagebereich eines Pflanztopfes handeln. Das kanalverbindungslose Loch befindet sich in einer Fläche, die an den Standbereich angrenzt und beispielsweise gekrümmt/gerundet sein kann oder auch als abgeknickte Ebene ausgebildet ist. Das Loch ist jedoch nicht in direkter Verbindung mit einer nicht an einer einen Kanal ausbildenden Seitenwand.

Um eine Entwässerung des untersten, inneren Pflanztopfbereiches, der zumeist eine vertikale Erstreckung von wenigen Millimetern aufweist, gewährleisten zu können, ist die Unterkante des Lochs maximal so weit von der tiefsten inneren Stelle des Pflanztopfes entfernt, wie eine kapillare Entwässerung durch das Loch hindurch in die Umgebung des Pflanztopfes bzw. die Hohllagebereiche hinein, gewährleistet werden kann. Je nach verwendetem Material für die Beschickung des Pflanztopfes handelt es sich hier um einen Abstand von weniger als 5 mm, bevorzugt weniger als 3 mm und besonders bevorzugt weniger als 1,5 mm.

Erfindungsgemäß beträgt die Niveaudifferenz der Löcher, deren äußerer Lochrand auf einem niedrigeren Niveau als ihr innerer Lochrand liegt, weniger als 1 mm, so dass eine langsame Entwässerung der untersten Pflanztopfbereiches realisierbar ist.

Vorzugsweise ist das Loch bezüglich der ersten Ebene zumindest teilweise schräg angestellt, so dass ein Übergang des Loches aus einer unteren in eine gekrümmte Ebene möglich ist und bei Aufstellung des Topfes auf einer Vliesmatte unbehindert erfolgen kann.

Das Loch und die um das Loch vorhandene Fläche befinden sich vorzugsweise auf der in Richtung einer zentralen Längsmittelachse zugewandten Seite einer Linie von der Längsmittelachse zum Standbereich, wobei die Fläche zu einer zentralen Längsmittelachse hin besonders bevorzugt ansteht. Hierbei verläuft der Standbereich vorzugsweise randseitig des Bodens oder Bodenbereiches, was einen besonders festen Stand des Pflanztopfes gewährleistet.

Die das Loch umgebende Fläche kann gekrümmt ausgebildet sein. Vorzugsweise handelt es sich jedoch um eine als Ebene ausgebildete Fläche, was fertigungstechnisch einfacher zu handhaben ist. Eine solche Ebene ist in einer vorteilhaften Weiterbildung der Erfindung zwischen der ersten und einer eine wesentliche Seitenwand eines zentralen Hohllagebereichs ausbildenden weiteren Ebene angeordnet. Der erfindungsgemäße Pflanztopf ist somit mit einer Mehrzahl von unterschiedlichen Ebenen versehen, wodurch eine unterschiedliche Anzahl von Ent- und Bewässerungsaufgaben optimiert werden können.

Es versteht sich, dass eine solche, ein kanalverbindungsloses Loch aufweisende Ebene mehrfach entlang des Umfangs des Pflanztopfes vorhanden sein kann. Bei einem beispielsweise vier Seitenwandungen aufweisenden Dom innerhalb des Pflanztopfes kann zwischen den äußeren Randbereichen bzw. Standbereichen jeweils eine Ebene zur Ausbildung des erfindungsgemäßen Pflanztopfes angeordnet sein. Die Fläche bzw. Ebene wird dann beispielsweise von zur Schnellentwässerung ausgebildeten Kanälen durchbrochen.

Eine solche Ebene ist weiterhin vorteilhaferweise mit zumindest zwei kanalverbindungslosen Löchern versehen, zwischen denen ein ein weiteres Loch aufweisender Flachkanal zur langsamen Entwässerung vorgesehen ist. Ein solcher zusätzlicher Kanal bedingt zwar einen zusätzlichen konstruktiven Aufwand, kann jedoch aufgrund seiner im Wesentlichen oder vollständig waagerecht verlaufenden Deckenschicht verhältnismäßig einfach hergestellt werden. Gleichzeitig unterstützt er eine Kapillarentwässerung der unteren Topfbereiche, was wiederum der Entwässerung der untersten Pflanztopfbereiche zugute kommt.

Der Standbereich des Pflanztopfes ist vorzugsweise aufstellfusslos ausgebildet, so dass die auf den Boden wirkenden Kräfte über eine große Fläche aufgenommen werden können und sich keine Mulden oder andere ungewollte Bodenerhebungen im untersten Pflanztopfbereich bilden, die dessen Entwässerung erschweren.

Besonders bevorzugt ist der Standbereich weiter durch einen in den Kanal hineinragenden Steg mit ausgebildet, der zur verbesserter Spapelbarkeit vorzugsweise nach innen hin gekrümmt und versetzt vom Randbereich her ausgebildet ist. Die Aufstellfläche wird somit vergrößert, ohne dass ein Durchtritt von Wasser und Luft durch den randseitig herausführenden Kanal behindert wäre. Des Weiteren wird hierdurch wirkungsvoll das Einreißen von Pflanztüten verhindert.

Weitere Vorteile und Ausgestaltungen der Erfindung lassen sich der nachfolgenden Figurenbeschreibung entnehmen. In den schematischen Darstellungen zeigt:
- Fig. 1: einen erfindungsgemäßen Gegenstand in einer Seitenansicht
- Fig. 2: den erfindungsgemäßen Gegenstand in einer perspektivischen Darstellung von schräg unten,

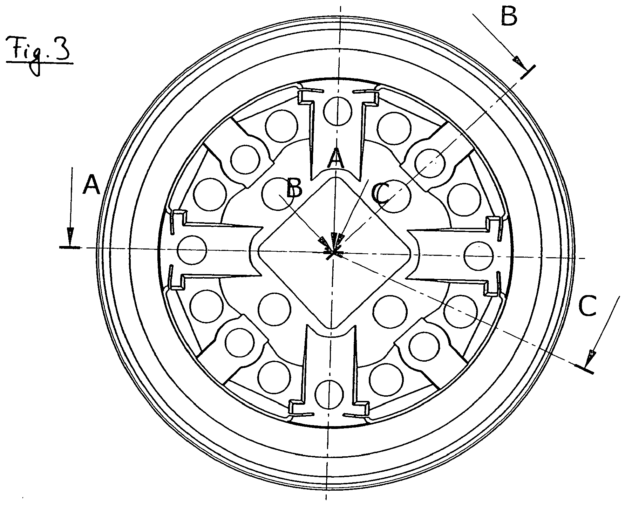

- Fig. 3: den Gegenstand nach Fig. 1 in einer unteren Ansicht,
- Fig. 4: den Gegenstand nach Fig. 3 entlang des Schnitts A-A,
- Fig. 5: den Gegenstand nach Fig. 3 entlang des Schnitts B-B,
- Fig. 6: den Gegenstand nach Fig. 3 entlang des Schnitts C-C.

Gleich oder ähnlich wirkende Teile sind -sofern dienlich- mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

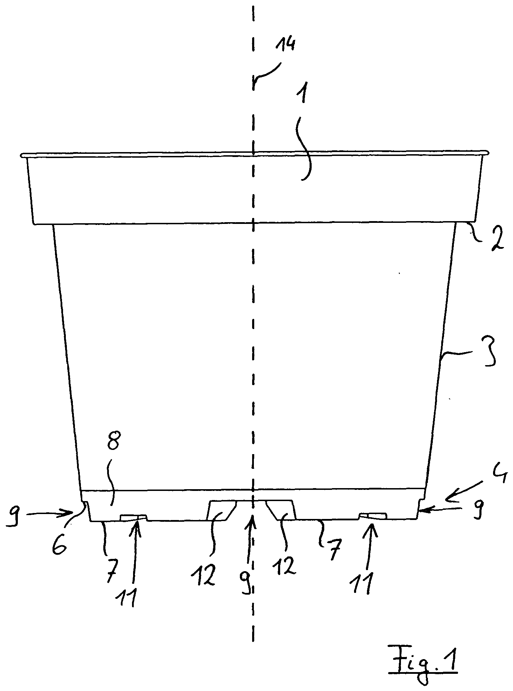

Der erfindungsgemäße Pflanztopf gemäß Fig. 1 umfasst einen oberen Rand 1, der über einen Vorsprung 2 mit der leicht schräg angestellten Pflanztopfseitenwand 3 verbunden ist.

Im Bodenbereich 4 sind auf der in der Figur linken und rechten Seite des Pflanztopfes über einen Vorsprung 6 rechtwinklig zum einem weiteren Kanal 9 verlaufender Kanäle 9 kenntlich gemacht. Der Bodenbereich 4 weist weiterhin eine untere Kante 7 auf, die Teil des Standbereichs zur Aufstellung des Pflanztopfes auf einer nicht dargestellten Kontaktfläche ist. Eine leicht angestellte, im Wesentlichen vertikale Seitenwand 8 des Bodenbereichs 4 ist unterbrochen von einem der schnellen Entwässerung dienenden, randseitig hinausführenden Kanal 9 sowie von zwei kleineren Flachkanälen 11, über die eine kapillare Entwässerung des inneren, im Pflanztopf befindlichen unteren Bereiches erfolgen kann.

Der zentrale Kanal 9 ist mittels leicht zurückgesetzter Stege 12 geringfügig verengt, was unter anderem eine verbesserte Stapelbarkeit mit sich bringt.

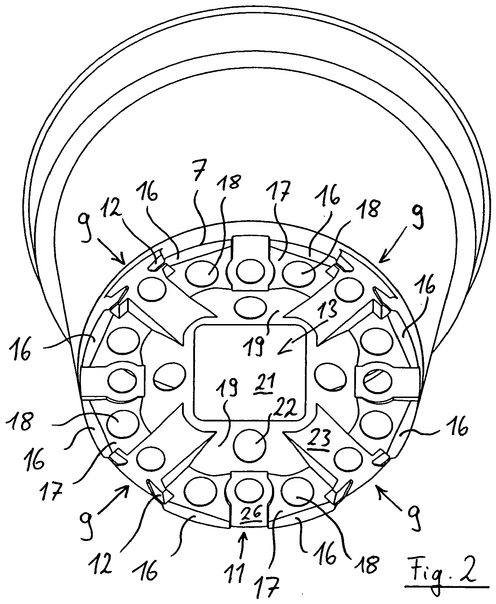

In der perspektivischen Ansicht der Unterseite des Pflanztopfes der Fig. 2 ist erkennbar, dass der Bodenbereich 4 insgesamt symmetrisch bezüglich einer Längsmittelachse 14 (vgl. Fig. 1) ausgebildet ist. Insgesamt existieren vier kreuzförmig angeordnete Kanäle 9, die in einen zentralen Hohllagebereich 13 münden, der in seiner annähernd quadratischen Ausgestaltung um eine Längsmittelachse 14 angeordnet ist.

Die Kanten 7 des Bodenbereichs 4 begrenzen einen äußeren Standbereich 16, der regelmäßig in mehreren Abschnitten entlang des Umfangs des Pflanztopfes verteilt ist. An den Standbereich grenzen Flächen 17 an, die ein der Entwässerung eines untersten Pflanztopfbereiches dienendes Loch 18 aufweisen. Die kanalverbindungslosen Löcher haben keine Verbindung zu einer zu einem Kanal gehörigenden Seitenwand und befinden sich in den in Richtung der Längsmittelachse 14 ansteigenden Flächen 17.

Weiter in Richtung der Längsmittelachse 14 schließt sich von den Flächen 16 aus abgeknickt eine deutlich steiler angestellte Fläche 19 an, die als Seitenwände den eine Kuppelfläche 21 aufweisenden Dom ausbilden. Auch in der Fläche 19 sind Entwässerungslöcher 22 für die Entwässerung oberhalb des unteren und untersten Pflanztopfbereiches vorhanden.

Die an die Standbereiche 16 angrenzenden Flächen 17 sind unterteilt durch die Flachkanäle 11, die in etwa auf gleicher Höhe zusammen mit der Fläche 17 an die Seitenwand 19 grenzen.

Zusammen mit den eine weitere Entwässerungsebene ausbildenden Deckenflächen 23 der Kanäle 9 weist der erfindungsgemäße Pflanztopf in der dargestellten Ausführung vier Entwässerungs- bzw. Belüftungsebenen auf. Er ist damit an eine Vielzahl unterschiedlicher Bewässerungs- und Belüftungssituationen anpassbar und sowohl für die Verwendung während einer Ebbe-/Flutbewässerung als auch für eine Berieselung von oben gut geeignet.

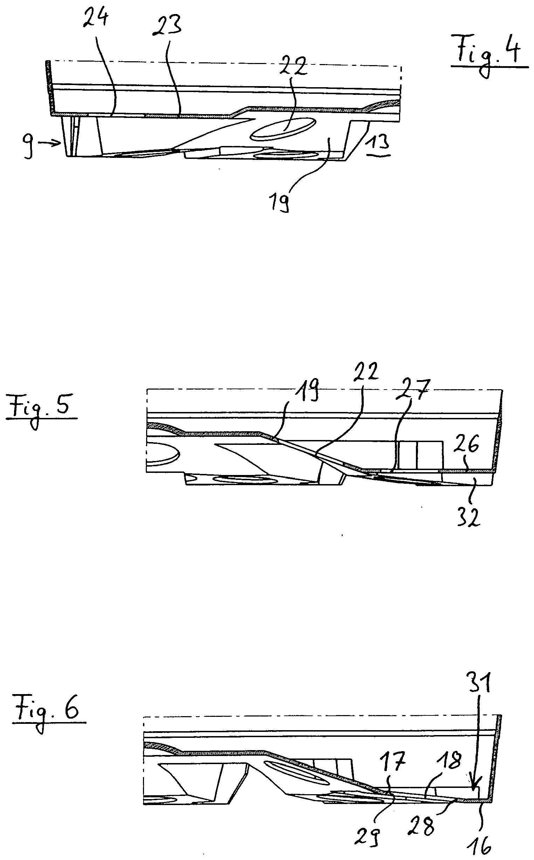

Die Vielzahl der Ent-/Bewässerungs- und Belüftungslöcher in den jeweiligen Ebenen lässt sich besonders gut dem Vergleich der Figuren 4 bis 6 entnehmen. Die der Schnellentwässerung dienenden Kanäle 9 weisen in ihren Deckenbereichen 23 Löcher 24 auf und bilden eine erste Entwässerungsebene. Die nächste Entwässerungsebene wird durch die Seitenwände 19 und die darin befindlichen Löchern 22 ausgebildet. Der Flachkanal 11 mit seinem Deckenbereich 26 ist vorzugsweise zur kapillaren Entwässerung durch die Löcher 27 geeignet. Gleiches gilt für die bis in den Standbereich hineinragenden Löcher 18 der an die Standfläche 16 grenzenden Flächen 17. Die Flächen 17 sind vorzugsweise in einem Bereich bis zu 10°, insbesondere von 6°, angewinkelt gegenüber dem Standbereich 16 und erstrecken sich bis zu einer Höhe von 1 mm bis 2 mm oberhalb der durch den Standbereich 16 gebildeten Ebene. Die Löcher 18 selbst reichen vorzugsweise bis in den Bodenbereich bzw. in den Standbereich 16 hinein und liegen mit ihrem äußeren Lochrand 28 auf einem niedrigen Niveau als mit ihrem inneren Lochrand 29. Die Niveaudifferenz beträgt weniger als 1 mm, so dass eine langsame Entwässerung des untersten Bodenbereichs 31 realisierbar ist. Der unterste Bodenbereich 31 lässt sich des Weiteren über die vertikale Erstreckung der Seitenwand 32 des Flachkanals 11 definieren (vgl. Fig. 5). In dem dargestellten Ausführungsbeispiel beträgt die Höhe dieses Bereiches ca. 1,5 mm.

## Patentansprüche

1. Pflanztopf aus Kunststoff mit einem mit Löchern (18,22,24,27) versehenen Boden, der einen eine erste Ebene ausbildenden, insbesondere mehrteiligen Standbereich (16) zur Aufstellung des Pflanztopfes auf einer Kontaktfläche aufweist, wobei der Standbereich (16) von wenigstens einem randseitig hinausführenden Kanal (9,11) unterbrochen ist, und der Pflanztopf in an den Standbereich (16) angrenzenden Flächen (17) der Entwässerung eines untersten Pflanztopfbereiches (31) dienende, beabstandet von einem Kanal (9,11) angeordnete Löcher (18) aufweist, deren äußerer Lochrand (28) auf einem niedrigeren Niveau als ihr innerer Lochrand (29) liegt, **dadurch gekennzeichnet, dass** die Niveaudifferenz weniger als 1 mm beträgt, so dass eine langsame Entwässerung des untersten Pflanztopfbereiches (31) realisierbar ist.

2. Pflanztopf nach Anspruch 1, **dadurch gekennzeichnet, dass** das Loch (18) bezüglich der ersten Ebene zumindest teilweise schräg angestellt ist.

3. Pflanztopf nach Anspruch 2, **dadurch gekennzeichnet, dass** die Fläche (17) zu einer zentralen Längsmittelachse (14) hin ansteigt.

4. Pflanztopf nach einem der vorherigen Ansprüche, **dadurch gekennzeichnet, dass** der Standbereich (16) randseitig des Bodens verläuft.

5. Pflanztopf nach einem der vorherigen Ansprüche, **dadurch gekennzeichnet, dass** die Fläche (17) eine Ebene ausbildet.

6. Pflanztopf nach Anspruch 5, **dadurch gekennzeichnet, dass** die Ebene zwischen der ersten und einer eine wesentliche Seitenwand eines zentralen Hohllagebereichs (13) ausbildenden weiteren Ebene (19) angeordnet ist.

7. Pflanztopf nach einem der vorherigen Ansprüche mit zwei kanalverbindungslosen Löchern (18), **dadurch gekennzeichnet, dass** zwischen den beiden kanalverbindungslosen Löchern (18) ein ein weiteres Loch (27) aufweisender Flachkanal (11) zur langsamen Entwässerung vorgesehen ist.

8. Pflanztopf nach einem der vorherigen Ansprüche, **dadurch gekennzeichnet, dass** der Pflanztopf aufstellfusslos ausgebildet ist.

9. Pflanztopf nach einem der vorherigen Ansprüche, **dadurch gekennzeichnet, dass** der Standbereich (16) durch einen in den Kanal (9) hineinragenden Steg (12) mit ausgebildet wird.

## Claims

1. Plant pot made of plastics material, comprising a base which is provided with holes (18, 22, 24, 27) and comprises an in particular multi-piece stand region (16), which forms a first plane, for placing the plant pot on a contact surface, the stand region (16) being broken up by at least one channel (9, 11) that leads out at the edge, and, in surfaces (17) that adjoin the stand region (16), the plant pot comprising holes (18) which are at a spacing from a channel (9, 11) and are used to drain a lowermost plant pot region (31), the outer rim (28) of the holes being at a lower level than the inner rim (29) thereof, **characterised in that** the difference in level is less than 1 mm, and therefore slow drainage of the lowermost plant pot region (31) can be achieved.

2. Plant pot according to claim 1, **characterised in that** the hole (18) is oblique, at least in part, with respect to the first plane.

3. Plant pot according to claim 2, **characterised in that** the surface (17) slopes upwards towards a central longitudinal axis (14).

4. Plant pot according to any of the preceding claims, **characterised in that** the stand region (16) extends at the edge of the base.

5. Plant pot according to any of the preceding claims, **characterised in that** the surface (17) forms a plane.

6. Plant pot according to claim 5, **characterised in that** the plane is arranged between the first plane and an additional plane (19) that forms a fundamental side wall of a central hollow-layer region (13).

7. Plant pot according to any of the preceding claims, comprising two holes (18) which are not connected to the channel, **characterised in that** a flat channel (11), comprising a further hole (27), for slow drainage is provided between the two holes (18) which are not connected to the channel.

8. Plant pot according to any of the preceding claims, **characterised in that** the plant pot does not comprise placement feet.

9. Plant pot according to any of the preceding claims, **characterised in that** the stand region (16) is also formed by a rib (12) that protrudes into the channel (9).

## Revendications

1. Pot pour plantes en matière synthétique comportant un fond, pourvu de trous (18, 22, 24, 27), qui comporte une zone d'appui (16), notamment en plusieurs parties état (16), formant un premier plan et destiné à placer le pot pour plantes sur une surface de contact, la zone d'appui (16) étant interrompu par au moins un canal (9, 11) menant à l'extérieur du côté bord, et le pot pour plantes comportant des trous (18) ménagés à distance d'un canal (9, 11) et servant au drainage d'une zone plus basse (31) du pot pour plantes dans des surfaces (17) adjacentes à la zone d'appui, le bord extérieur (28) des trous se trouvant à un niveau inférieur au bord intérieur (29) des trous, **caractérisé en ce que** la différence de niveau est inférieure à 1 mm de façon à réaliser un drainage lent de la zone la plus basse (31) du pot pour plantes.

2. Pot pour plantes selon la revendication 1, **caractérisé en ce que** le trou (18) est réalisé de manière au moins partiellement oblique par rapport au premier plan.

3. Pot pour plantes selon la revendication 2, **caractérisé en ce que** la surface (17) s'élève en direction d'un axe médian longitudinal central (14).

4. Pot pour plantes selon l'une des revendications précédentes, **caractérisé en ce que** la surface d'appui (16) s'étend du côté bord du fond.

5. Pot pour plantes selon l'une des revendications précédentes, **caractérisé en ce que** la surface (17) forme un plan.

6. Pot pour plantes selon la revendication 5, **caractérisé en ce que** le plan est disposé entre le premier plan et un autre plan (19) formant une paroi latérale principale d'une zone de couche creuse centrale (13).

7. Pot pour plantes selon l'une des revendications précédentes, comprenant deux trous (18) sans liaison par canal, **caractérisé en ce qu'**un canal plat (11), comportant un autre trou (27), est prévu entre les deux trous (18) sans liaison de canal pour le drainage lent.

8. Pot pour plantes selon l'une des revendications précédentes, **caractérisé en ce que** le pot pour plantes est formé sans pied d'appui.

9. Pot pour plantes selon l'une des revendications précédentes, **caractérisé en ce que** la zone d'appui (16) est formée par une nervure (12) saillant dans le canal (9).
